# EUROPEAN PATENT SPECIFICATION

(11) **EP 1 284 900 B1**
(45) Date of publication and mention of the grant of the patent: **07.04.2004**
(21) Application number: 01931953.2
(22) Date of filing: 25.05.2001
(51) Int. Cl.: B62K 11/02

(54) **MOTORCYCLE**
MOTORRAD
MOTOCYCLE

(30) Priority: 26.05.2000 GB 0012955
(43) Date of publication of application: 26.02.2003
(73) Proprietor: LOTUS CARS LIMITED, Norwich, Norfolk NR14 8EZ (GB)
(72) Inventor: WILLIAMS, Peter, Weybread Suffolk IP21 5TU (GB)
(74) Representative: Pluckrose, Anthony William
(86) International application number: PCT/GB2001/002348
(87) International publication number: WO 2001/089915

(56) References cited:
- GB-A- 2 238 514
- JP-A- 61 006 084
- US-A- 4 139 072
- US-A- 4 706 774
- US-A- 4 852 678

## Description

The present invention relates to a motorcycle.

Conventionally motorcycle frames typically have a simple frame of tubular or box metal onto which are mounted a fuel tank, an engine and suspension assemblies for front and rear wheels. Conventional motorcycle frame designs are quite complex and laborious to assemble. Generally the different frame sections must be welded together. It is important that the frame is carefully aligned with the front and rear suspension assemblies for the front and rear wheels, so that there is no offset between wheels in the finished motorcycle.

In GB-A-2238514 a motorcycle frame is described which comprises a steering head, a central load bearing bracket to which are mountable a rear suspension assembly and an engine, a single blade strut extending in or parallel to a principal longitudinal plane of the frame to connect the central load bearing bracket to the steering head and a pair of box struts connecting the central load-bearing bracket to the steering head. The box struts are spaced apart, one on either side of the central blade strut. The blade strut predominantly provides the frame with rigidity in longitudinal and vertical directions and the box struts predominantly provide the frame with rigidity in lateral and torsional directions. The single blade strut can be replaced by a pair of longitudinally extending spaced-apart blade struts sandwiched between the box struts. In the described design each box strut is connected to the steering head at only one location.

The present invention provides a motorcycle having a front wheel and a rear wheel which lie in a common principal plane of the motorcycle when the front wheel is in a centre position thereof, wherein the front and rear wheels are spaced apart longitudinally and are connected by a frame which comprises:
a steering head to which is pivotally mounted a front wheel suspension assembly for the front wheel, the front wheel suspension assembly being mounted for rotation about a pivot axis passing through the steering head, the steering head lying in the principal plane of the motorcycle and the front wheel suspension assembly having handlebars which extend transversely of the principal plane;
a bracket which lies in the principal plane to which is a mounted suspension assembly for the rear wheel;
a central strut and a side strut extending longitudinally between and connecting the steering head and the bracket, the central strut and the side strut being transversely spaced apart at least over a majority of their lengths ;wherein:
   the side strut is connected to the steering head at least at two separate locations spaced apart longitudinally on opposite sides of the pivot axis of the front wheel suspension assembly.

The present invention provides an improved connection between the side struts in the frame and the steering head. The improvement provides a triangulation of mounting points for each side strut and this considerably improves the rigidity of the frame and the security of fastening of the side struts in the frame.

Preferably, the motorcycle has a pair of side struts transversely spaced apart, one side strut on each side of the principal plane of the motorcycle. In this preferred embodiment, each of the side struts is connected to the steering head at least at two separate locations spaced apart longitudinally on opposite sides of the pivot axis of the front wheel suspension assembly.

Preferably each side strut is connected to the steering head at three locations, two locations rear of the pivot axis and one location forward of the pivot axis.

Preferably each side strut is connected to the steering head at three locations by three releasable mechanical fasteners. Preferably the mechanical fasteners are bolts.

Preferably each side strut is connected to the bracket by releasable mechanical fasteners and preferably the releasable mechanical fasteners connecting each side strut to the bracket comprise bolts.

In one embodiment the motorcycle comprises a single central strut which lies in the principal plane. In this embodiment the bracket can be an integral part of the central strut. Also in this embodiment each side strut can additionally be connected to the single central strut by a mechanical fastener.

In a second embodiment, a pair of central struts transversely spaced apart along the majority of their length lie on either side of the principal plane.

Preferably each of the side struts extend along a plane parallel to and spaced apart from the principal plane. The side struts can curve together and abut each other at front parts thereof. The side struts can have lower portions which extend inwardly towards the principal plane under the central strut(s) and which abut each other and which are joined together by at least one mechanical fastener. The side struts can have upper edge portions which extend inwardly toward the principal plane above the central strut(s) and which abut each other and together define at least some upper surface features of the motorcycle.

Preferably each side strut is generally L-shaped when viewed in side elevation. This has some advantages in allowing easy access to the engine for repair purposes. For the same reason, each central strut is preferably generally L-shaped when viewed in side elevation.

Preferably, the front wheel suspension assembly comprises a pair of spaced apart forks and the steering head and each side strut define therebetween an aperture through which one fork extends and wherein each defined aperture is of a size and configuration sufficient to allow for a range of pivotal motion of the forks about the pivot axis of the front wheel suspension assembly.

Preferably the steering head is formed from an extrusion, either of aluminium or of a plastic material. This will allow for simple and cost-effective production of the steering head.
Preferably, the bracket is formed from an extrusion either of aluminium or plastic material. Again, this allows for very cost-effective production.

Preferably the bracket has for each central strut a slot defined during extrusion of the bracket, each central strut being securely located in a respective slot therefor during manufacture of the motorcycle.

Preferably each side strut is a moulding. Preferably the moulded side strut has a recess defined in a transversely inwardly-facing surface thereof bounded by a boundary edge which matches an edge of the bracket whereby the boundary edge of the recess can be used to assist correct location and orientation of the side strut relative to the bracket during assembly. This is crucial in ensuring correct alignment of components in the finished motorcycle.

In a similar fashion, each side strut could have a recess defined in a transversely inwardly facing surface thereof bounded by a boundary edge which matches an edge of the steering head whereby the boundary edge of the recess can be used to assist correct location and orientation of the side strut relative to the steering head during assembly. Again, this is crucial to ensure correct alignment of components in the finished motorcycle.

Preferably each side strut of the motorcycle is hollow. At least one hollow side strut could be used to store gasoline for the motorcycle.

Preferably each side strut is formed from a composite material, a composite material containing either carbon fibres or glass fibres. Such composite materials have advantages in providing high strength and rigidity for low weight. The novel construction of the motorcycle frame facilitates use of composite materials. Indeed, it is preferred that each central strut is also formed from a composite material, containing either carbon or glass fibre.

Each side strut could be formed of structural plastics, perhaps with an inner part composed of a first structural plastic and an outer part of a second structural plastic.

To ensure minimum weight in the finished motorcycle, each side strut could have a plurality of apertures extending transversely therethrough. Additionally, or alternatively, each central strut could have a plurality of apertures extending transversely therethrough.

Preferably, each central strut is blade like in configuration having a maximum vertical dimension at least five times greater than the maximum transverse dimension thereof.

Preferably each central strut is mounted to an upwardly facing transversely extending surface of the bracket and each side strut is mounted to a transversely facing vertically extending surface of the bracket.

Preferably an engine and/or a seat assembly is/are mounted on and supported by the bracket.

The present invention also provides a method of manufacture of a motorcycle as described above, in which the central and side struts, the engine and the suspension assemblies are each fabricated as independent integers and the completed integers are joined together.

Preferred embodiments of the present invention will now be described with reference to the accompanying drawings in which:
Figure 1 is a schematic side elevation view of a first embodiment of motorcycle according to the present invention;
Figure 2 is a schematic plan view of the motorcycle of Figure 1;
Figure 3 is a schematic side elevation view of a second embodiment of motorcycle according to the invention;
Figure 4 is a schematic plan view of a third embodiment of motorcycle according to the present invention;
Figure 5 is a split view of a variant of the embodiment of motorcycle shown in Figure 1 showing two different cross-sections;
Figure 6 is a split view of a second variant of the embodiment of motorcycle shown in Figure 1, showing a first view which is in part a plan view and in part a horizontal cross-section and a second view which is a vertical cross-section; and
Figure 7 is a vertical transverse cross-section through the motorcycle of Figure 7 taken along the line A-A' in the direction of the arrows.

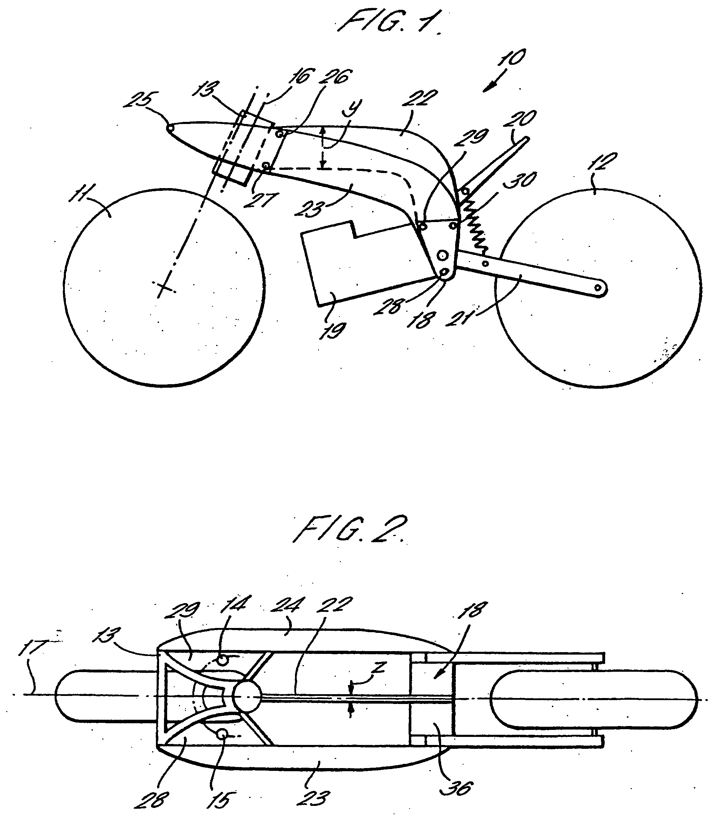

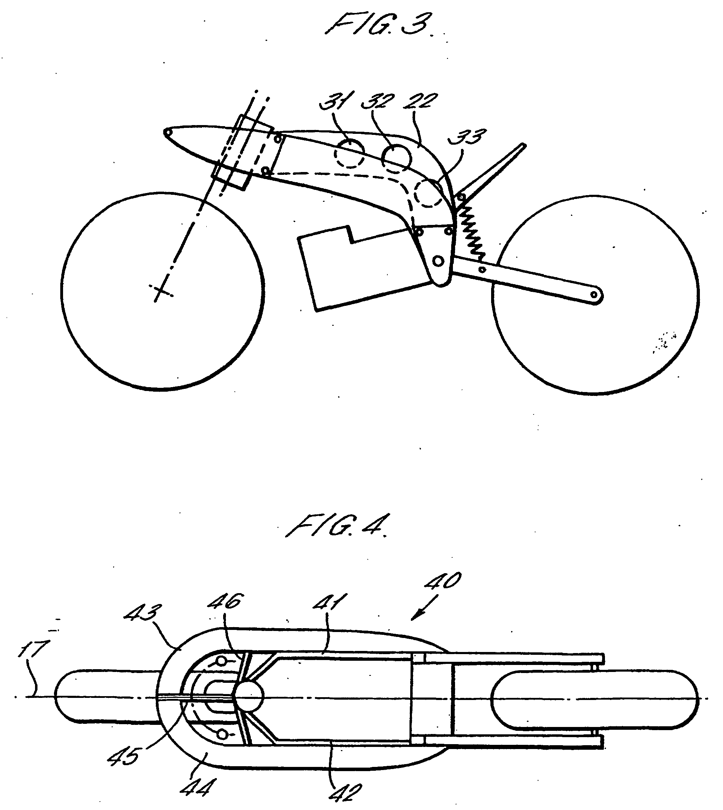

Turning now to Figure 1, a motorcycle 10 according to the present invention can be seen to comprise a front wheel 11 and a rear wheel 12. The front wheel 11 and the rear wheel 12 lie in a common principal plane when the front wheel is in a centre position thereof. The front wheel 11 and the rear wheel 12 are spaced apart longitudinally and are connected by a frame. The frame comprises a steering head 13 to which is pivotally mounted a front wheel suspension assembly for the front wheel 11. The front wheel suspension assembly is not illustrated in Figure 1 for reasons of simplicity but in Figure 2 there can be seen two forks 14 and 15 of the front wheel suspension assembly. The forks 14 and 15 are parallel and spaced apart.

The steering head assembly (not shown in detail) for the front wheel 11 is pivotally mounted to the steering head 13, the front wheel assembly being mounted for rotation about a pivot axis 16 passing through the steering head 13. The steering head 13 lies in the principal plane of the motorcycle and is displaced vertically above the front wheel 11. The front wheel suspension assembly will have handlebars (not shown) which extend transversely of the principal plane of the motorcycle. It will be appreciated that as viewed in Figure 1, the principal plane of the motorcycle lies in the plane of the paper so that anything extending transversely of the principal plane will extend out of the plane of the paper or behind the plane of the paper. The principal plane is illustrated by dotted line 17 in Figure 2.

The frame of the motorcycle comprises a bracket 18 to which are mounted an engine 19, a seat assembly 20 (with the seat omitted for simplicity) and a rear wheel suspension assembly 21 for the rear wheel 12.

The motorcycle has a central strut 22 which in the embodiment shown is generally L-shaped when viewed in a side elevation. The central strut 22 is blade-like in configuration having a vertical dimension (Y in Figure 1) at least five times greater than its transverse dimension (Z in Figure 2).

The motorcycle also comprises a pair of side struts 23, 24 transversely spaced apart. One side strut 23,24 lies on each side of the principal plane 17 of the motorcycle. Each side strut 23,24 is generally L-shaped when viewed in a side elevation.

The central strut 22 and the side struts 23 and 24 connect the steering head 13 with the bracket 18.

As can be seen most clearly in Figure 1, the side strut 23 is connected to the steering head 13 by three bolts 25, 26 and 27. Two bolts 26 and 27 connect the side strut 23 to the steering head 13 at two locations to the rear of the pivot axis 16. One bolt 25 connects the side strut 23 to the steering head 13 at a location forward of the pivot axis 16. The side strut 23 is connected to the steering head 13 at separate locations spaced apart longitudinally on opposite sides of the pivot axis 16 of the front wheel suspension assembly.

The side strut 23 is also connected to the bracket 18 by three bolts 28, 29 and 30.

It should be understood that the side strut 24 will in identical manner be connected to the steering head 13 by three bolts and to the bracket 18 by three bolts.

The applicant has found that the connection of the side struts 23 and 24 to the steering head 13 in front of the pivot axis 16 as well as rear of the pivot axis 16 has a significant effect in improving the rigidity of the motorcycle frame and particularly the rigidity of the motorcycle frame in response to torsional loading. This effect is provided even whilst maintaining a simplicity of construction, namely the use of bolts as a means of connecting the side struts 23 and 24 to the remainder of the motorcycle, with the advantage that this gives that the side struts 23 and 24 are easily detachable.

As can be seen in Figure 2, the steering head 13 co-operates with the side strut 23 to define an aperture 28 through which a front fork 15 passes. The aperture must be of a shape and size sufficient to allow the front fork 15 to pivot about the pivot axis 16 to allow steering of the motorcycle. In a similar fashion, the steering head 13 defines with the side strut 24 an aperture 29 in which the front fork 14 can rotate.

Preferably the steering head 13 is formed as an extrusion, for instance of aluminium or of a plastic material. This is a very cost-efficient way of manufacturing the steering head 13. Indeed, an extrusion process can also be used to manufacture the bracket 18, which again can be manufactured either from aluminium or a plastic material in an extrusion process. Once again, extrusion will provide cost savings in the manufacture of the motorcycle as a whole.

It will be appreciated from Figure 1 that the central strut 22 is mounted to an upwardly facing and transversely extending surface 36 (see Figure 2) of the bracket 18. The side struts 23 and 24 are mounted to vertically extending and transversely facing side surfaces of the bracket 18.

The extrusion of the bracket 18 will allow formation in the bracket 18 of a slot which can receive the central strut 22 and which can thereby allow easy attachment of the strut 22 to the bracket 18.

In the preferred embodiment, each side strut 23, 24 is a hollow moulding. One or both of the side struts 22 and 23 could be used as a container for gasoline for the motorcycle. Additionally, or alternatively, a battery and/or electric components could be stored within the hollow side struts 22 and 23.

To ease manufacture, each side strut 23, 24 may have a moulded recess defined in a transversely inwardly facing surface thereof. The recess will be bounded by a boundary edge which matches an edge of the bracket 18. The abutment of this boundary edge (not shown specifically in the drawings) with a matching edge on the bracket 18 during assembly will ensure correct location and orientation of each side strut 23, 24 relative to the bracket 18.

In a similar fashion, each side strut 23, 24 may have a recess defined in a transversely inwardly facing surface thereof which is bounded by a boundary edge which matches an edge of the steering head 13. The matching engagement of the boundary edge of the recess in the moulded side strut with the corresponding edge on the steering head can be used to assure correct location and orientation of the side struts 23, 24 relative to the steering head 13 during assembly.

The side struts are preferably formed of a composite material, e.g. a composite material containing glass fibres or containing carbon fibres. Such composite materials give advantages of strength and rigidity for low weight. Indeed, composite materials can also be used for the central strut 22, which again can be formed of composite materials comprising carbon fibres or glass fibres.

To maximise weight saving the central strut 22 and/or the side struts 23, 24 can have apertures extending therethrough.

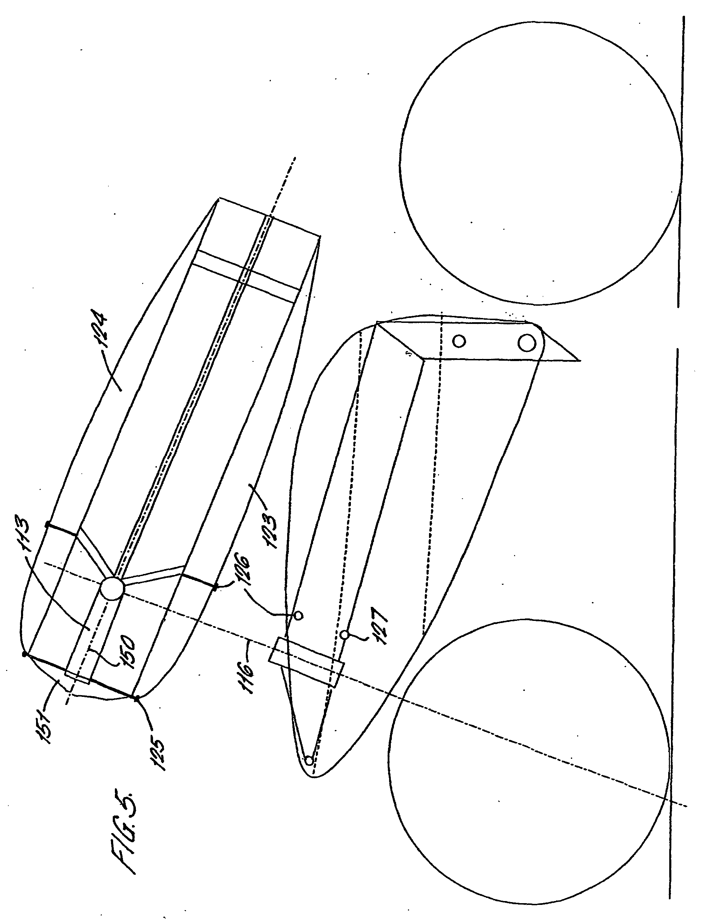

In Figure 3 there can be seen a central strut 22 which has a plurality of apertures 31, 32 and 33 extending transversely therethrough.

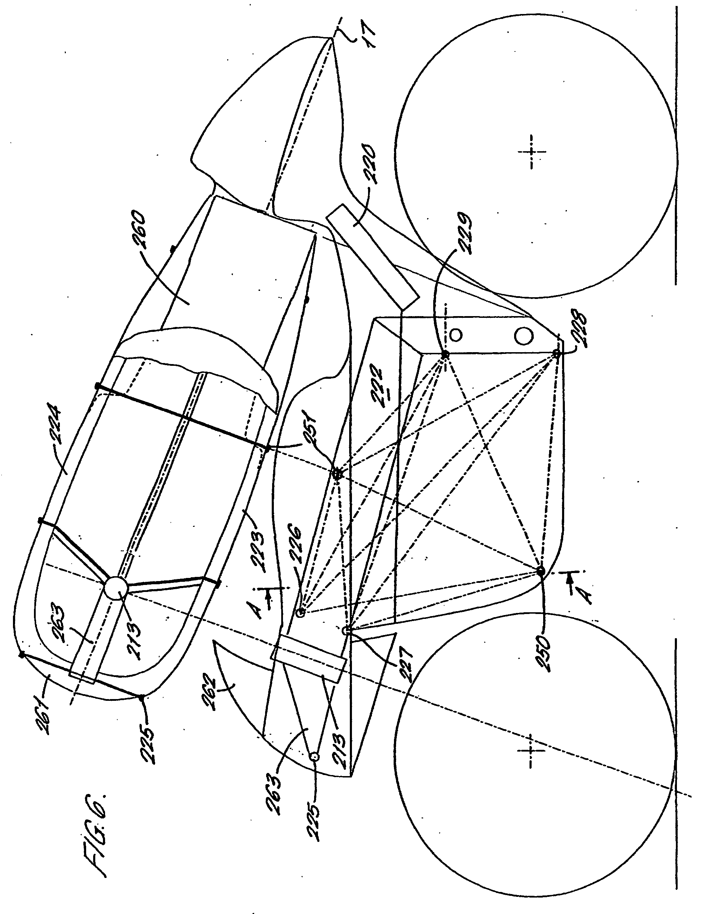

A third embodiment of the motorcycle 40 according to the present invention can be seen in Figure 4. In many respects this embodiment is identical to the previous embodiments. Therefore, only the differences will be discussed.

The central strut 22 of the embodiments of Figures 1 to 3 is replaced in the Figure 4 embodiment by a pair of central struts 41 and 42 transversely spaced apart along the majority of their lengths, lying either side of the principal plane 17. This arrangement can be advantageous to allow a different packaging of components in the motorcycle has a whole.

The Figure 4 embodiment also differs from the embodiments of earlier Figures because the side struts 43 and 44 are of a different configuration. The side struts 23 and 24 of the earlier embodiments each extend generally longitudinally along a plane parallel to and spaced apart from the principal plane 17. Whilst the side struts 43 and 44 have rearward portions which extend along planes parallel to and spaced apart from the principal plane 17, the front portions of both side struts 43 and 44 taper inwardly to connect with a forwardly extending spur of the steering head 45. Such an arrangement will allow a different styling for the motorcycle overall.

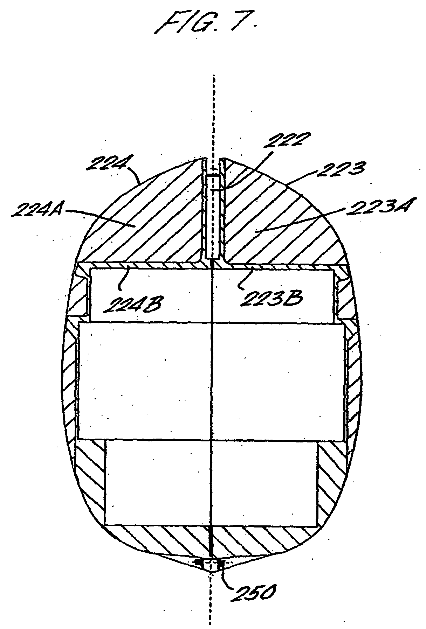

A variant of the embodiment of Figures 1 and 2 is shown in Figure 5. The two side struts 123 and 124 have a different shape to the side struts 23 and 24. The steering head 113 had a single forwardly extending strut 150 and the two side struts 123 and 124 are connected together by a long bolt 125 extending transversely through the strut 150. A front cover member 151 is affixed at the front end spanning the front edges of the two side struts 123 and 124.

A further variant of the embodiment of Figures 1 and 2 is shown in Figure 6. The diagram is a split cross-section schematic diagram. The top part of the diagram shows a view which is in part a plan view of the top surface of the motorcycle frame (at the rear of the frame) and elsewhere in cross-section through the frame structure transversely to the principal plane 17. The bottom part of the diagram shows a view which is a cross-section through the motorcycle frame taken parallel to the principal plane 17. In this variant the two side struts 223 and 224 are additionally joined to the central strut 222 by a bolt 251 which extends transversely of the principal plane 17 through the central strut 272 and joins the two side struts 223, 224 together and to the central strut 222. Also the two side struts 223 and 224 extend lower than those of the Figures 1 and 2 embodiment and meet along lower edges. A bolt 250 is used to connect together the two side struts 223 and 224 and a forward part of their lower edges. The side strut's 223 and 224 also extend over the top of the central strut 222 to abut each other and define the upper surface of the motorcycle. For instance, a seat 260 can be seen in the upper part of the Figure 6 (the seat being supported by the strut 220 shown in the Figure). Front edges of the side struts abut each other to define a curved front portion 261 of the motorcycle and a small wind deflector 262. A bolt 225 connects the front parts of the side struts 223, 224 together and to a forward extending strut 263 of the steering head 213. The dotted lines in the Figure 6 interconnecting the bolts 226, 227, 250, 251, 228 and 229 show lines of force transmission through the assembled structure. The structure does not have a bolt equivalent to bolt 30 of Figure 1 since the bolt 251 provides the necessary triangulation of forces.

Figure 7 shows a cross-section through the motorcycle frame of Figure 6. Each side strut 223, 224 is comprised of structural plastics. For instance, the side strut 223 comprises an inner part 223B of a class B structural plastic and an outer part 223A of a class A structural plastic. The outer part 223A encases the inner part 223B and provides the majority of the outer surface.

In each of the variants of Figures 5,6 and 7 the bracket for mounting the engine, the seat assembly and the wheel suspension assembly for the rear wheel 12 is integral with the central strut.

All of the embodiments of motorcycle described above allow a simplified method of manufacture. It is envisaged that each side strut, 23 and 24, or 43 and 44, will be manufactured independently. It is envisaged that each central strut, 22 or 41 and 42 will be manufactured independently. It is envisaged that the bracket 18 will be manufactured independently. It is envisaged that the engine 19 will be manufactured independently. It is also envisaged that the front wheel suspension assembly will be manufactured independently. It is further envisaged that the rear wheel suspension assembly will be manufactured independently . All of the independently manufactured sub-assemblies can be joined together in a simple production line to form the finished motorcycle . The use of moulded side struts which have predefined recesses (see above ) matching edges of the steering head and the bracket and which are connectable by bolts greatly speeds and simplifies construction .

Whilst all of the embodiments of motorcycle described and shown in the accompanying drawings comprise central 22 and side 23, 24 struts of generally L-shaped construction, it will be appreciated that any shape of strut may be used provided adequate strength and structural integrity is achieved in the overall structure. The shape of strut may, for example, be chosen to accommodate different sub-assembly designs. Alternatively, the shape of strut may be selected to facilitate ease of access to the engine and/or other components for maintenance or repair purposes. For example, it may be preferable to provide a structure which is shaped so as to enclose, at least partially, a rider, thus providing extra structural protection or protection from the elements. The shape of strut selected may even be a simple straight element.

It will be appreciated that whilst it is described above that component parts such as the steering head 13 and bracket 18 are preferably formed as an extrusion, any suitable alternative methods of manufacture, such as casting for example, may be employed.

## Claims

1. A motorcycle (10) having a front wheel (11)and a rear wheel (12)which lie in a common principal plane (11) of the motorcycle (10) when the front wheel (11) is in a centre position thereof, wherein the front (11) and rear (12) wheels are spaced apart longitudinally and are connected by a frame which comprises:
a steering head (13; 113) to which is pivotally mounted a front wheel suspension assembly for the front wheel (11), the front wheel suspension assembly being mounted for rotation about a pivot axis (16) passing through the steering head (13), the steering head (13) lying in the principal plane (17) of the motorcycle and the front wheel suspension assembly having handlebars which extend transversely of the principal plane (17);
a bracket (18) which lies in the principal plane (17) to which is mounted a wheel suspension assembly for the rear wheel (12);
a central strut (22; 41,42; 222) and a side strut (23,24; 43,44; 123,124; 223,224) extending longitudinally between and connecting the steering head (13) and the bracket (18), the central strut (22; 41,42; 222) and the side strut (23,24; 43,44; 123,124; 223,224) being transversely spaced apart at least over a majority of their lengths; **characterized in that**
the side strut (23,24; 43,44; 123,124; 223,224)is connected to the steering head at least at two separate locations spaced apart longitudinally on opposite sides of the pivot axis (16) of the front wheel suspension assembly; wherein the front wheel suspension assembly comprises a pair of spaced apart parallel forks and the steering head and each side strut define therebetween an aperture through which one fork extends and wherein each defined aperture is of a size and configuration sufficient to allow for a range of pivotal motion of the forks about the pivot axis of the front wheel suspension assembly.

2. A motorcycle as claimed in claim 1 which has a pair of side struts (23,24; 43,44; 123,124; 223,224) transversely spaced apart, one side strut on each side of the principal plane (17)of the motorcycle (10) and wherein each of the side struts (23,24; 43,44; 123,124; 223,224) is connected to the steering head (13; 113)at least at two separate locations spaced apart longitudinally on opposite sides of the pivot axis (16) of the front wheel suspension assembly.

3. A motorcycle as claimed in claim 1 or claim 2 wherein each side strut (23,24; 43,44; 123,124; 223,224) is connected to the steering head at three locations, two locations rear of the pivot axis (16) and one location forward of the pivot axis (16).

4. A motorcycle as claimed in claim 3 wherein each side strut (23,24; 43,44; 123,124; 223,224) is connected to the steering head at the three locations by three releasable mechanical fasteners (25,26,27; 125,126,127; 225,226,227).

5. A motorcycle as claimed in claim 4 wherein the mechanical fasteners (25,26,27; 125,126,127; 225,226,227) are bolts.

6. A motorcycle as claimed in any one of the preceding claims wherein each side strut is connected to the bracket (18) by releasable mechanical fasteners (28,29,30; 228,229).

7. A motorcycle as claimed in claim 6 wherein the releasable mechanical fasteners (28,29,30; 228,229) connecting each side strut (23,24; 43,44; 123,124; 223,224) to the bracket comprises bolts.

8. A motorcycle as claimed in any one of the preceding claims comprising a single central strut (22; 222) which lies in the principal plane.

9. A motorcycle as claimed in claim 8 wherein the bracket (18) is an integral part of the single central strut (22; 222).

10. A motorcycle as claimed in claim 8 or claim 9 wherein each side strut (223,224) is connected to a midpoint of the single central strut (222) by a mechanical fastener (251).

11. A motorcycle as claimed in any one of claims 1 to 7 comprising a pair of central struts(41,42) transversely spaced apart along a majority of their lengths lying one on either side of the principal plane.

12. A motorcycle as claimed in any one of the preceding claims wherein each of the side struts (23,24; 43,44; 123,124; 223,224) extends along a plane parallel to and spaced apart from the principal plane (17).

13. A motorcycle as claimed in claim 12 wherein the side struts (43,44; 223,224) curve together and abut each other in the front parts thereof.

14. A motorcycle as claimed in claim 12 or claim 13 wherein the side struts (223,224)have lower edge portions which extend inwardly towards the principal plane (17) under the central strut(s) (222) and which abut each other and which are joined together by at least one mechanical fastener (250).

15. A motorcycle as claimed in any one of claims 12 to 14 wherein the side struts (223,224) have upper edge portions which extend inwardly towards the principal plane (17) above the central strut(s)(222) and which abut each other and together define at least some upper surface (260) features of the motorcycle.

16. A motorcycle as claimed in any one of the preceding claims where each side strut (23,24; 43,44; 123,124; 223,224) is generally L-shaped when viewed in a side elevation.

17. A motorcycle as claimed in any one of the preceding claims wherein the steering head (13; 113)is formed from an extrusion.

18. A motorcycle as claimed in claim 17 wherein the steering head (13; 113) is formed from an extrusion of aluminium, or an alloy thereof.

19. A motorcycle as claimed in claim 17 wherein the steering head is formed from an extrusion of a plastic material.

20. A motorcycle as claimed in any one of the preceding claims wherein the bracket (18) is formed from an extrusion.

21. A motorcycle as claimed in claim 20 wherein the bracket (18) is formed from an extrusion of aluminium or an alloy thereof.

22. A motorcycle as claimed in claim 20 wherein the bracket (18) is formed from an extrusion of a plastic material.

23. A motorcycle as claimed in any one of claims 20 to 22 wherein the extrusion of the bracket (18) has for each central strut (22; 41,42; 222) a slot defined during extrusion of the bracket (18) each central strut (22; 41,42; 222) being securely located in the respective slot therefor during manufacture of the motorcycle.

24. A motorcycle as claimed in any one of the preceding claims wherein each side strut (23,24; 43,44; 123,124; 223,224) is a moulding.

25. A motorcycle as claimed in claim 24 wherein each side strut (23,24; 43,44; 123,124; 223,224) has a recess defined in a transversely inwardly facing surface thereof bounded by a boundary edge which matches an edge of the bracket whereby the boundary edge of the recess can be used to assist correct location and orientation of the side strut relative to the bracket during assembly.

26. A motorcycle as claimed in claim 24 or 25 wherein each side strut (23,24; 43,44; 123,124; 223,224) has a recess defined in a transversely inwardly facing surface thereof bounded by a boundary edge which matches an edge of the steering head whereby the boundary edge of the recess can be used to assist correct location and orientation of the side strut (23,24; 43,44; 123,124; 223,224) relative to the steering head during assembly.

27. A motorcycle as claimed in any one of claims 24 to 26 wherein each side strut (23,24; 43,44; 123,124; 223,224) is hollow.

28. A motorcycle as claimed in claim 28 wherein at least one hollow side strut (23,24; 43,44; 123,124; 223,224) can be used to store gasoline.

29. A motorcycle as claimed in any one of the preceding claims wherein each of the side struts (23,24; 43,44; 123,124; 223,224) is formed from a composite material.

30. A motorcycle as claimed in claim 27 wherein the composite material of each side strut (23,24; 43,44; 123,124) contains carbon fibres.

31. A motorcycle as claimed in claim 29 wherein the composite material of each side strut (23,24; 43,44; 123,124) contains glass fibres.

32. A motorcycle as claimed in any one of claims 1 to 28 wherein each of the side struts (223,224) is formed of structural plastics.

33. A motorcycle as claimed in claim 32 wherein each of the side struts (223,224) has an inner part (223B,224B) composed of a first structural plastic encased in an outer part (223A, 224A) of a second structural plastic material.

34. A motorcycle as claimed in any one of the preceding claims wherein each central strut (22; 41,42; 222) is formed from a composite material.

35. A motorcycle as claimed in claim 34 wherein the composite material of each central strut (22; 41,42; 222) contains carbon fibres.

36. A motorcycle as claimed in claim 35 wherein the composite material of each central strut (22; 41,42; 222) contains glass fibres.

37. A motorcycle as claimed in any one of the preceding claims wherein each central strut (22) has a plurality of apertures (31,32,33) extending transversely therethrough.

38. A motorcycle as claimed in any one of the preceding claims wherein each central strut (22; 41,42; 222) is blade like in configuration having a maximum vertical dimension at least five times greater than a maximum transverse dimension thereof.

39. A motorcycle as claimed in any one of the preceding claims wherein each side strut ((23,24; 43,44; 123,124; 223,224) is mounted to a transversely facing vertically extending surface of the bracket (18).

40. A motorcycle as claimed in any one of the preceding claims wherein an engine is mounted on and supported by the bracket (18).

41. A motorcycle as claimed in any one of the preceding claims wherein a seat assembly (20) is mounted on and supported by the bracket (18).

42. A method of manufacture of a motorcycle as claimed in any one of the preceding claims in which the central (22; 41,42; 222) and side (23,24; 43,44; 123,124; 223,224) struts, the engine and the suspension assemblies are each separately fabricated as independent integers and then the completed integers are joined together.

## Patentansprüche

1. Motorrad (10) mit einem Vorderrad (11) und einem Hinterrad (12), die in einer gemeinsamen Hauptebene (11) des Motorrads (10) liegen, wenn sich das Vorderrad (11) in seiner Mittelposition befindet, wobei das Vorderrad (11) und das Hinterrad (12) in Längsrichtung voneinander beabstandet sind und durch einen Rahmen verbunden sind, wobei der Rahmen umfasst:
einen Lenkkopf (13; 113), an welchem eine Vorderradaufhängungs-Baugruppe für das Vorderrad (11) schwenkbar montiert ist, wobei die Vorderradaufhängungs-Baugruppe um eine durch den Lenkkopf (13) hindurchführende Lenkachse (16) drehbar gelagert ist, wobei der Lenkkopf (13), der in der Hauptebene (17) des Motorrads und der Vorderradaufhängungs-Baugruppe liegt, Lenkstangen aufweist, die sich quer zur Hauptebene (17) erstrecken;
eine in der Hauptebene (17) liegende Halterung (18), an der eine Radaufhängungs-Baugruppe für das Hinterrad (12) montiert ist;
eine zentrale Strebe (22; 41, 42; 222) und eine Seitenstrebe (23, 24; 43, 44; 123, 124; 223, 224), die sich in Längsrichtung zwischen dem Lenkkopf (13) und der Halterung (18) erstrecken und den Lenkkopf und die Halterung verbinden, wobei die zentrale Strebe (22; 41, 42; 222) und die Seitenstrebe (23, 24; 43, 44; 123, 124; 223, 224) zumindest über einen Großteil ihrer Längen in Querrichtung voneinander beabstandet sind;
**dadurch gekennzeichnet,**
**dass** die Seitenstrebe (23, 24; 43, 44; 123, 124; 223, 224) wenigstens an zwei separaten Stellen, die in Längsrichtung auf entgegengesetzten Seiten der Lenkachse (16) der Vorderradaufhängungs-Baugruppe voneinander beabstandet sind, mit dem Lenkkopf verbunden ist;
wobei die Vorderradaufhängungs-Baugruppe ein Paar voneinander beabstandeter paralleler Gabeln aufweist und der Lenkkopf und jede Seitenstrebe dazwischen eine Öffnung definieren, durch welche sich eine Gabel erstreckt, und wobei jede definierte Öffnung ausreichend bemessen und konfiguriert ist, um einen Schwenkbewegungsbereich der Gabeln um die Lenkachse der Vorderradaufhängungs-Baugruppe zu ermöglichen.

2. Motorrad nach Anspruch 1, welches ein Paar von in Querrichtung voneinander beabstandeten Seitenstreben (23, 24; 43, 44; 123, 124; 223, 224) aufweist, nämlich eine Seitenstrebe auf jeder Seite der Hauptebene (17) des Motorrads (10), und wobei jede der Seitenstreben (23, 24; 43, 44; 123, 124; 223, 224) zumindest an zwei separaten Stellen, die in Längsrichtung auf entgegengesetzten Seiten der Lenkachse (16) der Vorderradaufhängungs-Baugruppe voneinander beabstandet sind, mit dem Lenkkopf (13; 113) verbunden ist.

3. Motorrad nach Anspruch 1 oder Anspruch 2, wobei jede Seitenstrebe (23, 24; 43, 44; 123, 124; 223, 224) an drei Stellen mit dem Lenkkopf verbunden ist, wovon zwei Stellen hinter der Lenkachse (16) liegen und eine Stelle vor der Lenkachse (16) liegt

4. Motorrad nach Anspruch 3, wobei jede Seitenstrebe (23, 24; 43, 44; 123, 124; 223, 224) durch drei lösbare mechanische Befestigungselemente (25, 26, 27; 125, 126, 127; 225, 226, 227) an drei Stellen mit dem Lenkkopf verbunden ist

5. Motorrad nach Anspruch 4, wobei die mechanischen Befestigungselemente (25, 26, 27; 125, 126, 127; 225, 226, 227) Bolzen sind.

6. Motorrad nach einem der vorhergehenden Ansprüche, wobei jede Seitenstrebe durch lösbare mechanische Befestigungselemente (28, 29, 30; 228, 229) mit der Halterung (18) verbunden ist.

7. Motorrad nach Anspruch 6, wobei die lösbaren mechanischen Befestigungsetemente (28, 29, 30; 228, 229), die jede Seitenstrebe (23, 24; 43, 44; 123, 124; 223, 224) mit der Halterung verbinden, Bolzen umfasst.

8. Motorrad nach einem der vorhergehenden Ansprüche, umfassend eine einzige zentrale Strebe (22; 222), die in der Hauptebene liegt.

9. Motorrad nach Anspruch 8, wobei die Halterung (18) ein integraler Teil der einzigen zentralen Strebe (22; 222) ist.

10. Motorrad nach Anspruch 8 oder Anspruch 9, wobei jede Seitenstrebe (223, 224) durch ein mechanisches Befestigungselement (251) mit einem Mittelpunkt der einzigen zentralen Strebe (222) verbunden ist.

11. Motorrad nach einem der Ansprüche 1 bis 7, umfassend ein Paar zentraler Streben (41, 42), die entlang eines Großteils ihrer Längen in Querrichtung voneinander beabstandet sind, wobei jeweils eine auf beiden Seiten der Hauptebene liegt.

12. Motorrad nach einem der vorhergehenden Ansprüche, wobei sich jede der Seitenstreben (23, 24; 43, 44; 123, 124; 223, 224) entlang einer Ebene erstreckt, die parallel zur Hauptebene (17) liegt und von dieser beabstandet ist.

13. Motorrad nach Anspruch 12, wobei die Seitenstreben (43, 44; 223, 224) in einem Bogen zusammenlaufen und in ihren vorderen Bereichen aneinanderstoßen.

14. Motorrad nach Anspruch 12 oder Anspruch 13, wobei die Seitenstreben (223, 224) Unterkantenbereiche aufweisen, die sich unter der(den) zentralen Strebe(n) (222) einwärts in Richtung auf die Hauptebene (17) erstrecken und die aneinanderstoßen und durch zumindest ein mechanisches Befestigungselement (250) miteinander verbunden sind.

15. Motorrad nach einem der Ansprüche 12 bis 14, wobei die Seitenstreben (223, 224) Oberkantenbereiche aufweisen, die sich über der(den) zentralen Strebe(n) (222) einwärts in Richtung auf die Hauptebene (17) erstrecken und die aneinanderstoßen und zusammen zumindest einige Merkmale der Oberfläche (260) des Motorrads definieren.

16. Motorrad nach einem der vorhergehenden Ansprüche, wobei jede Seitenstrebe (23, 24; 43, 44; 123,124; 223, 224) in einer Seitenansicht betrachtet allgemein L-förmig ist.

17. Motorrad nach einem der vorhergehenden Ansprüche, wobei der Lenkkopf (13; 113) aus einer Extrusion gebildet ist.

18. Motorrad nach Anspruch 17, wobei der Lenkkopf (13; 113) aus einer Extrusion von Aluminium oder einer Legierung davon gebildet ist.

19. Motorrad nach Anspruch 17, wobei der Lenkkopf aus einer Extrusion eines Kunststoffmaterials gebildet ist.

20. Motorrad nach einem der vorhergehenden Ansprüche, wobei die Halterung (18) aus einer Extrusion gebildet ist.

21. Motorrad nach Anspruch 20, wobei die Halterung (18) aus einer Extrusion von Aluminium oder einer Legierung davon gebildet ist

22. Motorrad nach Anspruch 20, wobei die Halterung (18) aus einer Extrusion eines Kunststoffmaterials gebildet ist.

23. Motorrad nach einem der Ansprüche 20 bis 22, wobei die Extrusion der Halterung (18) einen während des Extrudierens der Halterung (18) definierten Schlitz für jede zentrale Strebe (22; 41, 42; 222) aufweist, wobei jede zentrale Strebe (22; 41, 42; 222) während der Herstellung des Motorrads in dem jeweiligen Schlitz dafür sicher angeordnet wird.

24. Motorrad nach einem der vorhergehenden Ansprüche, wobei jede Seitenstrebe (23, 24; 43, 44; 123, 124; 223, 224) ein Formteil ist.

25. Motorrad nach Anspruch 24, wobei jede Seitenstrebe (23, 24; 43, 44; 123, 124; 223, 224) eine in ihrer transversal nach innen weisenden Oberfläche definierte Ausnehmung aufweist, die mit einer Randkante umrandet ist, die sich mit einer Kante der Halterung ergänzt, wodurch die Randkante der Ausnehmung während der Montage zur Unterstützung einer korrekten Anordnung und Orientierung der Seitenstrebe relativ zu der Halterung benutzt werden kann.

26. Motorrad nach Anspruch 24 oder 25, wobei jede Seitenstrebe (23, 24; 43, 44; 123, 124; 223, 224) eine in ihrer transversal nach innen weisenden Oberfläche definierte Ausnehmung aufweist, die mit einer Randkante umrandet ist, die sich mit einer Kante des Lenkkopfs ergänzt, wodurch die Randkante der Ausnehmung während der Montage zur Unterstützung einer korrekten Anordnung und Orientierung der Seitenstrebe (23, 24; 43, 44; 123, 124; 223, 224) relativ zu dem Lenkkopf benutzt werden kann.

27. Motorrad nach einem der Ansprüche 24 bis 26, wobei jede Seitenstrebe (23, 24; 43, 44; 123, 124; 223, 224) hohl ist

28. Motorrad nach Anspruch 28, wobei zumindest eine hohl ausgebildete Seitenstrebe (23, 24; 43, 44; 123, 124; 223, 224) zum Speichern von Kraftstoff verwendet werden kann.

29. Motorrad nach einem der vorhergehenden Ansprüche, wobei jede der Seitenstreben (23, 24; 43, 44; 123, 124; 223, 224) aus einem Verbundmaterial gebildet ist.

30. Motorrad nach Anspruch 27, wobei das Verbundmaterial jeder Seitenstrebe (23, 24; 43, 44; 123, 124) Kohlenstofffasem enthält.

31. Motorrad nach Anspruch 29, wobei das Verbundmaterial jeder Seitenstrebe (23, 24; 43,44; 123, 124) Glasfasern enthält.

32. Motorrad nach einem der Ansprüche 1 bis 28, wobei jede der Seitenstreben (223, 224) aus Konstruktionskunststoff gebildet ist.

33. Motorrad nach Anspruch 32, wobei jede der Seitenstreben (223, 224) einen aus einem ersten Konstruktionskunststoff bestehenden Innenteil (223B, 224B) aufweist, der von einem Außenteil (223A, 224A) aus einem zweiten Konstruktionskunststoffmaterial ummantelt ist.

34. Motorrad nach einem der vorhergehenden Ansprüche, wobei jede zentrale Strebe (22; 41, 42; 222) aus einem Verbundmaterial gebildet ist.

35. Motorrad nach Anspruch 34, wobei das Verbundmaterial jeder zentralen Strebe (22; 41, 42; 222) Kohlenstofffasern enthält.

36. Motorrad nach Anspruch 35, wobei das Verbundmaterial jeder zentralen Strebe (22; 41, 42; 222) Glasfasern enthält.

37. Motorrad nach einem der vorhergehenden Ansprüche, wobei jede zentrale Strebe (22) eine Mehrzahl von Öffnungen (31, 32, 33) aufweist, die sich quer durch sie hindurch erstrecken.

38. Motorrad nach einem der vorhergehenden Ansprüche, wobei jede zentrale Strebe (22; 41, 42; 222) in ihrer Konfiguration blattähnlich ist, mit einer maximalen vertikalen Dimension, die mindestens fünfmal größer als ihre maximale transversale Dimension ist.

39. Motorrad nach einem der vorhergehenden Ansprüche, wobei jede Seitenstrebe (23, 24; 43, 44; 123, 124; 223,224) an einer in Querrichtung weisenden, sich vertikal erstreckenden Oberfläche der Halterung (18) montiert ist.

40. Motorrad nach einem der vorhergehenden Ansprüche, wobei ein Motor an der Halterung (18) montiert und durch die Halterung getragen ist.

41. Motorrad nach einem der vorhergehenden Ansprüche, wobei eine Sitz-Baugruppe (20) an der Halterung (18) montiert und durch die Halterung getragen ist.

42. Verfahren zur Herstellung eines Motorrads gemäß einem der vorhergehenden Ansprüche, bei welchem die zentrale bzw. zentralen (22; 41, 42; 222) und die seitliche bzw. seitlichen (23, 24; 43, 44; 123, 124; 223, 224) Streben, der Motor und die Aufhängungsbaugruppen jeweils getrennt als unabhängige ganze Teile hergestellt und dann die fertigen ganzen Teile zusammengefügt werden.

## Revendications

1. Motocycle (10) comportant une roue avant (11) et une roue arrière (12) qui se trouvent dans un plan principal commun (17) du motocycle (10) lorsque la roue avant (11) se trouve dans sa position centrée, dans lequel les roues avant (11) et arrière (12) sont espacées longitudinalement et sont reliées par un cadre qui comprend :
une tête (13 ; 113) de direction sur laquelle est monté pivotant un ensemble de suspension de roue avant destiné à la roue avant (11), l'ensemble de suspension de roue avant étant monté pour rotation autour d'un axe (16) de pivot passant par la tête (13) de direction, la tête (13) de direction se trouvant dans le plan principal (17) du motocycle, et l'ensemble de suspension de roue avant comportant un guidon qui s'étend transversalement au plan principal (17) ;
un support (18) qui se trouve dans le plan principal (17), sur lequel est monté un ensemble de suspension de roue destiné à la roue arrière (12) ;
une barre centrale (22 ; 41, 42 ; 222) et une barre latérale (23, 24 ; 43, 44 ; 123, 124 ; 223, 224) s'étendant longitudinalement entre la tête (13) de direction et le support (18), et établissant une liaison entre eux, la barre centrale (22 ; 41, 42 ; 222) et la barre latérale (23, 24 ; 43, 44 ; 123, 124 ; 223, 224) étant espacées transversalement au moins sur une grande partie de leur longueur ; **caractérisé en ce que**
la barre latérale (23, 24 ; 43, 44 ; 123, 124 ; 223, 224) est reliée à la tête de direction au moins au niveau de deux emplacements distincts espacés longitudinalement sur les côtés opposés de l'axe (16) de pivot de l'ensemble de suspension de roue avant ; dans lequel
l'ensemble de suspension de roue avant comprend deux fourches parallèles espacées et la tête de direction et chaque barre latérale définissent, entre elles, une ouverture à travers laquelle s'étend une fourche et dans lequel chaque ouverture définie a une taille et une configuration suffisante pour permettre une plage de mouvements pivotants des fourches autour de l'axe de pivot de l'ensemble de suspension de roue avant.

2. Motocycle selon la revendication 1, qui comporte deux barres latérales (23, 24 ; 43, 44 ; 123, 124 ; 223, 224) espacées transversalement, une barre latérale de chaque côté du plan principal (17) du motocycle (10), et dans lequel chacune des barres latérales (23, 24 ; 43, 44 ; 123, 124 ; 223, 224) est reliée à la tête (13 ; 113) de direction au moins au niveau de deux emplacements distincts espacés longitudinalement sur les côtés opposés de l'axe (16) de pivot de l'ensemble de suspension de roue avant.

3. Motocycle selon la revendication 1 ou la revendication 2, dans lequel chaque barre latérale (23, 24 ; 43, 44 ; 123, 124 ; 223, 224) est reliée à la tête de direction au niveau de trois emplacements, deux emplacements en arrière de l'axe (16) de pivot et un emplacement en avant de l'axe (16) de pivot.

4. Motocycle selon la revendication 3, dans lequel chaque barre latérale (23, 24 ; 43, 44 ; 123, 124 ; 223, 224) est reliée à la tête de direction au niveau de trois emplacements par trois dispositifs de fixation mécaniques libérables (25, 26, 27 ; 125, 126, 127 ; 225, 226, 227).

5. Motocycle selon la revendication 4, dans lequel les dispositifs de fixation mécaniques (25, 26, 27 ; 125, 126, 127 ; 225, 226, 227) sont des boulons.

6. Motocycle selon l'une quelconque des revendications précédentes, dans lequel chaque barre latérale est reliée au support (18) par des dispositifs de fixation mécaniques libérables (28, 29, 30 ; 228, 229).

7. Motocycle selon la revendication 6, dans lequel les dispositifs de fixation mécaniques libérables (28, 29, 30 ; 228, 229) reliant chaque barre latérale (23, 24 ; 43, 44 ; 123, 124 ; 223, 224) au support comprennent des boulons.

8. Motocycle selon l'une quelconque des revendications précédentes, comprenant une unique barre centrale (22 ; 222) qui se trouve dans le plan principal.

9. Motocycle selon la revendication 8, dans lequel le support (18) fait partie intégrante de l'unique barre centrale (22 ; 222).

10. Motocycle selon la revendication 8 ou la revendication 9, dans lequel chaque barre latérale (223, 224) est reliée à un point milieu de l'unique barre centrale (222) par un dispositif de fixation mécanique (251).

11. Motocycle selon l'une quelconque des revendications 1 à 7, comprenant deux barres centrales (41, 42) espacées transversalement le long d'une grande partie de leur longueur se trouvant d'un côté ou de l'autre du plan principal.

12. Motocycle selon l'une quelconque des revendications précédentes, dans lequel chacune des barres latérales (23, 24 ; 43, 44 ; 123, 124 ; 223, 224) s'étend le long d'un plan parallèle au plan principal (17) et espacé de celui-ci.

13. Motocycle selon la revendication 12, dans lequel les barres latérales (43, 44 ; 223, 224) suivent conjointement une courbe et butent l'une contre l'autre au niveau de leur partie avant.

14. Motocycle selon la revendication 12 ou la revendication 13, dans lequel les barres latérales (223, 224) comportent des parties inférieures de bord qui s'étendent vers l'intérieur en direction du plan principal (17) sous la/les barre(s) centrale(s) (222) et qui butent l'une contre l'autre et qui sont reliées l'une à l'autre par au moins un dispositif de fixation mécanique (250).

15. Motocycle selon l'une quelconque des revendications 12 à 14, dans lequel les barres latérales (223, 224) comportent des parties supérieures de bord qui s'étendent vers l'intérieur en direction du plan principal (17) au-dessus de la/des barre(s) centrale(s) (222) et qui butent l'une contre l'autre et définissent conjointement au moins certaines particularités de surface supérieure (260) du motocycle.

16. Motocycle selon l'une quelconque des revendications précédentes, dans lequel chaque barre latérale (23, 24 ; 43, 44 ; 123, 124 ; 223, 224) a globalement une forme de L lorsqu'on l'observe en élévation latérale.

17. Motocycle selon l'une quelconque des revendications précédentes, dans lequel la tête (13 ; 113) de direction est formée à partir d'une extrusion.

18. Motocycle selon la revendication 17, dans lequel la tête (13 ; 113) de direction est formée à partir d'une extrusion d'aluminium, ou d'un alliage de celui-ci.

19. Motocycle selon la revendication 17, dans lequel la tête de direction est formée à partir d'une extrusion d'une matière plastique.

20. Motocycle selon l'une quelconque des revendications précédentes, dans lequel le support (18) est formé à partir d'une extrusion.

21. Motocycle selon la revendication 20, dans lequel le support (18) est formé à partir d'une extrusion d'aluminium, ou d'un alliage de celui-ci.

22. Motocycle selon la revendication 20, dans lequel le support (18) est formé à partir d'une extrusion d'une matière plastique.

23. Motocycle selon l'une quelconque des revendications 20 à 22, dans lequel l'extrusion du support (18) comporte, pour chaque barre centrale (22 ; 41, 42 ; 222), une fente définie pendant l'extrusion du support (18), chaque barre centrale (22 ; 41, 42 ; 222) étant positionnée fixement dans la fente respective réservée à cet usage pendant la fabrication du motocycle.

24. Motocycle selon l'une quelconque des revendications précédentes, dans lequel chaque barre latérale (23, 24 ; 43, 44 ; 123, 124 ; 223, 224) est un moulage.

25. Motocycle selon la revendication 24, dans lequel chaque barre latérale (23, 24 ; 43, 44 ; 123, 124 ; 223, 224) comporte un évidement défini dans sa surface faisant face transversalement vers l'intérieur délimité par un bord de délimitation qui est apparié avec un bord du support, ce par quoi, pendant l'assemblage, le bord de délimitation de l'évidement peut être utilisé pour assister au positionnement et à l'orientation corrects de la barre latérale par rapport au support.

26. Motocycle selon la revendication 24 ou 25, dans lequel chaque barre latérale (23, 24 ; 43, 44 ; 123, 124 ; 223, 224) comporte un évidement défini dans sa surface faisant face transversalement vers l'intérieur délimité par un bord de délimitation qui est apparié avec un bord de la tête de direction, ce par quoi, pendant l'assemblage, le bord de délimitation de l'évidement peut être utilisé pour assister au positionnement et à l'orientation corrects de la barre latérale (23, 24 ; 43, 44 ; 123, 124 ; 223, 224) par rapport à la tête de direction.

27. Motocycle selon l'une quelconque des revendications 24 à 26, dans lequel chaque barre latérale (23, 24 ; 43, 44 ; 123, 124 ; 223, 224) est creuse.

28. Motocycle selon la revendication 28, dans lequel au moins une barre latérale creuse (23, 24 ; 43, 44 ; 123, 124 ; 223, 224) peut être utilisée pour stocker de l'essence.

29. Motocycle selon l'une quelconque des revendications précédentes, dans lequel chacune des barres latérales (23, 24 ; 43, 44 ; 123, 124 ; 223, 224) est formée à partir d'un matériau composite.

30. Motocycle selon la revendication 27, dans lequel le matériau composite de chaque barre latérale (23, 24 ; 43, 44 ; 123, 124) contient des fibres de carbone.

31. Motocycle selon la revendication 29, dans lequel le matériau composite de chaque barre latérale (23, 24 ; 43, 44 ; 123, 124) contient des fibres de verre.

32. Motocycle selon l'une quelconque des revendications 1 à 28, dans lequel chacune des barres latérales (223, 224) est formée de matières plastiques structurelles.

33. Motocycle selon la revendication 32, dans lequel chacune des barres latérales (223, 224) comporte une partie intérieure (223B, 224B) composée d'un premier plastique structurel confiné dans une partie extérieure (223A, 224A) d'une seconde matière plastique structurelle.

34. Motocycle selon l'une quelconque des revendications précédentes, dans lequel chaque barre centrale (22 ; 41, 42 ; 222) est formée à partir d'un matériau composite.

35. Motocycle selon la revendication 34, dans lequel le matériau composite de chaque barre centrale (22 ; 41, 42 ; 222) contient des fibres de carbone.

36. Motocycle selon la revendication 35, dans lequel le matériau composite de chaque barre centrale (22 ; 41, 42 ; 222) contient des fibres de verre.

37. Motocycle selon l'une quelconque des revendications précédentes, dans lequel chaque barre centrale (22) comporte plusieurs ouvertures (31, 32, 33) s'étendant transversalement à travers celle-ci.

38. Motocycle selon l'une quelconque des revendications précédentes, dans lequel chaque barre centrale (22 ; 41, 42 ; 222) a une configuration de type lame ayant une dimension verticale maximale au moins cinq fois supérieure à sa dimension transversale maximale.

39. Motocycle selon l'une quelconque des revendications précédentes, dans lequel chaque barre latérale (23, 24 ; 43, 44 ; 123, 124 ; 223, 224) est montée sur une surface, s'étendant verticalement faisant face transversalement, du support (18).

40. Motocycle selon l'une quelconque des revendications précédentes, dans lequel un moteur est monté sur le support (18) et est supporté par celui-ci.

41. Motocycle selon l'une quelconque des revendications précédentes, dans lequel un ensemble (20) de siège est monté sur le support (18) et est supporté par celui-ci.

42. Procédé de fabrication d'un motocycle selon l'une quelconque des revendications précédentes, dans lequel les barres centrales (22 ; 41, 42 ; 222) et latérales (23, 24 ; 43, 44 ; 123, 124 ; 223, 224), le moteur et les ensembles de suspension sont tous fabriqués séparément en tant qu'éléments constituants indépendants, et dans lequel les éléments constituants terminés sont assemblés les uns aux autres.
